**Europäisches Patentamt**

**European Patent Office**

**Office européen des brevets**

(11) Publication number: **0 302 873**
**B1**

(12) **EUROPEAN PATENT SPECIFICATION**

(45) Date of publication of patent specification: **30.01.91**

(51) Int. Cl.⁵: **B 60 P 3/11, B 64 F 1/22**

(21) Application number: **87902526.0**

(22) Date of filing: **24.04.87**

(86) International application number:
**PCT/FI87/00053**

(87) International publication number:
**WO 87/06542 05.11.87 Gazette 87/24**

(54) **A DEVICE FOR MOVING A WHEELED VEHICLE.**

(30) Priority: **24.04.86 FI 861714**

(43) Date of publication of application:
**15.02.89 Bulletin 89/07**

(45) Publication of the grant of the patent:
**30.01.91 Bulletin 91/05**

(84) Designated Contracting States:
**AT BE CH DE FR GB IT LI LU NL SE**

(56) References cited:
**WO-A-85/01265**
**DE-A-3 014 767**
**DE-A-3 318 077**
**DE-A-3 327 628**
**US-A-3 005 510**

(73) Proprietor: **TANA-JYRÄ KY**
**PI 7**
**SF-40801 Vaajakoski (FI)**

(72) Inventor: **SINKKONEN, Matti**
**Talo 22**
**SF-40800 Vaajakoski (FI)**

(74) Representative: **Lauw, Rudolf C. W., Dipl.-Ing.,**
**Dipl.-Wirtschaftsing.**
**Karwinskistrasse 1**
**D-8000 München 60 (DE)**

Courier Press, Leamington Spa, England.

# Description

This invention relates to a transfer device as specified in the preamble of Claim 1, for example as disclosed in WO 85/01265, Figures 16 to 18.

Such vehicles being for example a motor vehicle, a trailer, or an aircraft, and the base being, for example the ground, a road, an airfield, the floor of a building, a loading bay, the platform of a truck or railway wagon.

Usually tractors are used to move aircraft around an airfield, and these must be heavily constructed to give them sufficient traction. As the size of aircraft increases so ever larger tractors are required with a heavy construction, large wheels, efficient brakes, and massive axles. In order to reduce the deadweight of the device for moving aircraft a system is used in which the device lifts the wheel of the aircraft completely off the ground, in which case the weight coming onto the wheel is also transferred completely to the wheels of the device. Devices of this kind are shown for example in the German application publications DE 33 27 628 and DE 30 14 767.

The weight of the transfer device can be substantially decreased if the driving force is transferred to the wheel of the aircraft from the drive wheel on the device. This presupposes that the drive wheel is pressed against the aircraft wheel with a force that is usually a few percent of the weight coming onto the wheel. The most usual solution in connection with a transfer device of this kind is that the transfer device is attached by means of a suitable member to the bogie of the aircraft or to the ends of the axle in order to achieve a counterforce to the pressure. A transfer device of this kind cannot be used to move any kind of aircraft whatever, for there must be corresponding members in the aircraft bogie in order to make the attachment of the transfer device possible. A construction for a light completely general purpose transfer device in shown in the Finnish patent application FI 833275 (partially corresponding to WO 85/01265). This requires no contact on the aircraft bogie in order to press the drive roller against the wheel. The pressure is achieved by means of the mutual movement of two pressure rollers placed round the aircraft wheel and connected by an intermediate member. In the most general form the intermediate member pulls the two pressure rollers held by it together so that they are pressed against the wheel between them. At least one of the pressure roller is now a drive roller, which transfers its turning force to the aircraft wheel.

It is the intention of this invention to achieve a transfer device, in which there is a new simple method of arranging the pressing of the drive roller against the aircraft wheel without fixed contact to the bogie or corresponding part of the frame. The characteristics of the invention can be seen in the accompanying Patent Claim 1. The main principle of the invention is to achieve the pressure referred to by the common movement or twisting of rollers a set distance apart, which is easier to achieve than their mutual movement. The counterforce is applied to the ground through the wheels of the transfer device. There may also be crawler tracks in place of rollers as such. In place of the wheel of the vehicle to be moved there may also be a group of wheels. The fixed distance of the pressure and drive rollers must naturally be less than the diameter of the wheel of the vehicle to be moved or than the length of the corresponding group of wheels. When moving a vehicle with wheels in a bogie one drive roller is sufficient according to the invention, is this is wedged between the bogie wheels by lifting it by supporting it against the frame of the transfer device. What is then subtantive is that the counterforce caused by the pressure is directed to the ground. By forming the drive and pressure roller in accordance with patent Claim 4 the fact that the rollers remain stably round the wheel of the vehicle to be moved is achieved.

In what follows the invention is illustrated with the aid of Examples by referring to the accompanying illustrations, in which

Figure 1 shows the transfer device being brought round a pair of wheels of an aircraft, seen from above;

Figure 2 shows the situation in Figure 1 seen from the side;

Figure 3 shows the transfer device in the operating position seen from above; and

Figure 4 shows the situation in Figure 3 seen from the side in part cross-section.

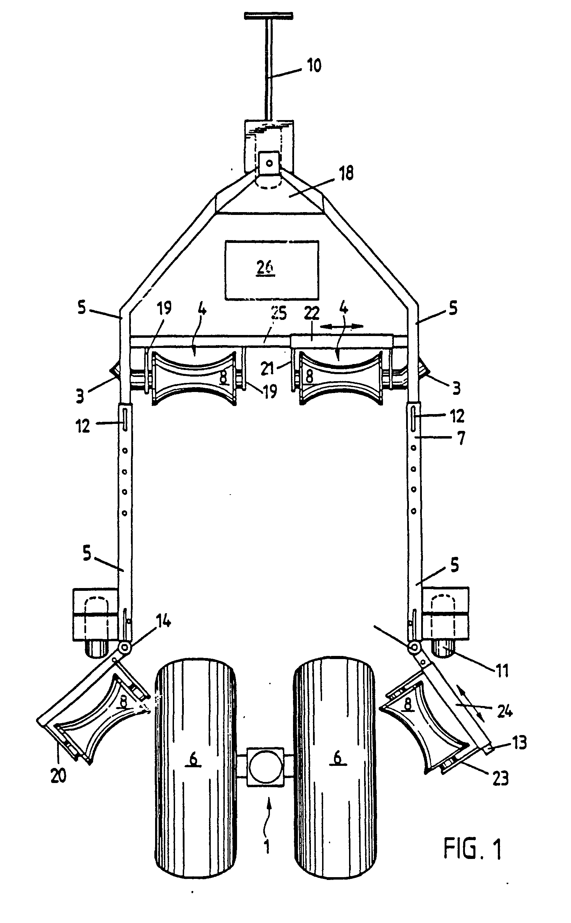

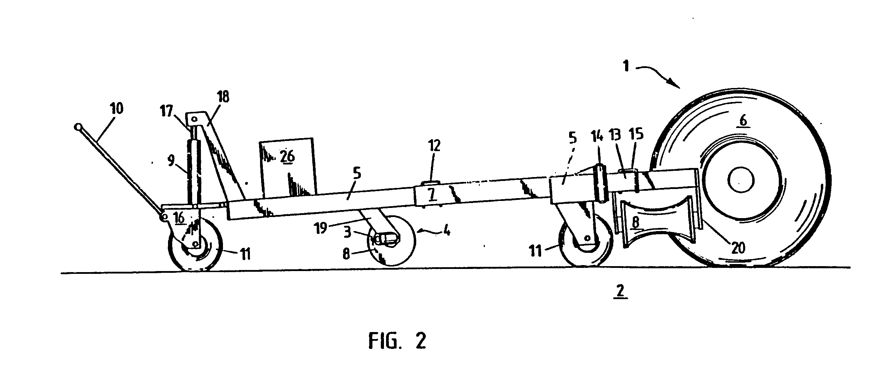

The transfer devices shown in Figures 1 to 4 is intended to move aircraft 1 on airfield 2. In the illustrations only part of the landing gear and wheels 6 of aircraft 1 are shown. The transfer device is moved on wheels 11 and its principal components are the drive and pressure rollers 4, 8 attached to the frame 5 and the intermediate member 7. Each of the wheels 6 have their own pressure and drive rollers. The rear pressure rollers 8 can be turned to the side in which case the transfer device forms a U-fork, which is pushed around the pair of wheels of the aircraft, Figures 1 and 2. The movement of the transfer device takes place from the drawbar 10 which is jointed to the carrier fork 16 of the steerable front wheel 11. The front end of the frame 5 is also jointed to this. Cylinder 9 is installed on top of the carrier fork 16 and the piston 17 of the cylinder is jointed to the bracket 18 attached to the front end of the frame 5.

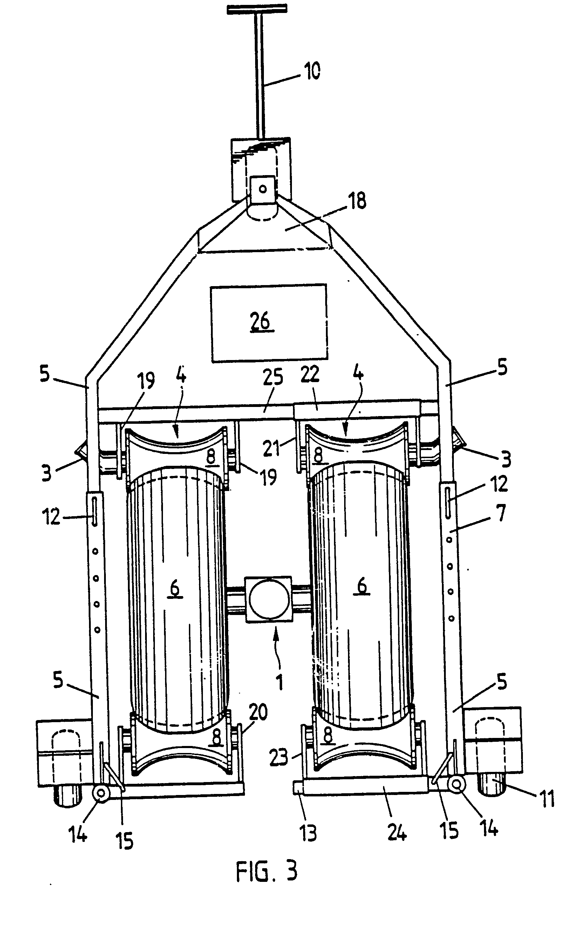

The intermediate member 7 that keeps the drive and pressure rollers 4, 8 at a fixed distance is here formed as a part of frame 5 in such a way that it forms a telescopic part of the side beam of frame 5, in which the length is varied by means of the U-pin 12. The variation is required on account of the various wheel diameters found in different aircraft. The turning of the rear pressure roller 8 is carried out by the turnable support arm 13, which is connected to the frame 5 by means of a joint 14. The locking of arm 13 into the operating position takes place by means of the U-pin 15. In addition to the aforementioned adjustment in length adjustment of the lateral spacing of the parallel pressure rollers 8 is required in accordance with the width of the pair of wheels of the aircraft. This is realised in such a way that the carrier forks of the drive and pressure rollers 4, 8 on one side are attached to slide sleeves 24 and 22, which can move to a limited extent on one of the turnable arms 13 and correspondingly on the guide formed by the transverse frame beam 25, Figure 3.

The transfer device in accordance with Figures 1 and 2 is pushed around the wheels 6 of the aircraft, after which the turnable arms 13 are turned to the crosswise position and locked by pin 15. The front pressure rollers 8 also operate as drive rollers 4 with the aid of the hydraulic motors 3.

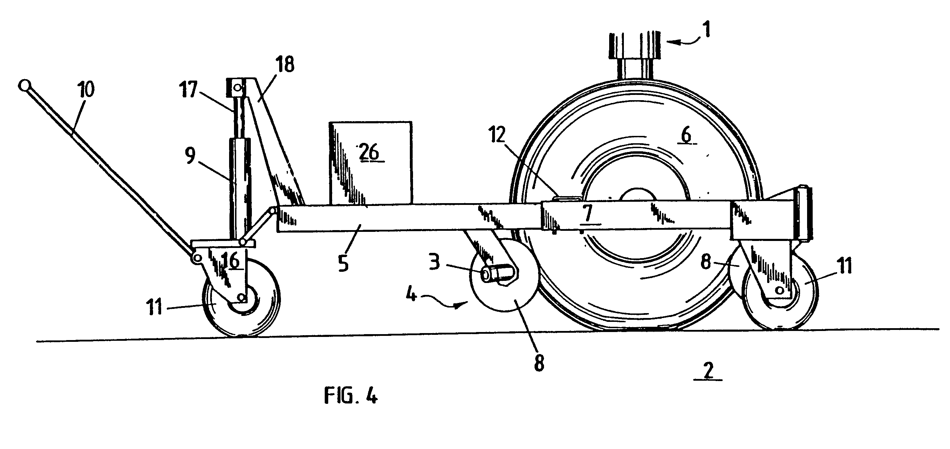

The transfer of the driving force from the drive roller 4 to the wheel 6 now requires that these are pressed together. This is carried out by lifting the front part of the frame 5 by means of cylinder 9 when the drive roller 4 moves into sufficient contact with wheel 6, Figures 3 and 4. The rear pressure roller 8 is essential in order to achieve the counterforce. Drive roller 4 turns by means of the hydraulic motor 3, which is permanently attached to it, an which is fed from power unit 26. This contains for example an internal combustion motor and a hydraulic pump. The hydraulic connections between the pump and the motor 3 are not shown. The transfer device also includes a control unit (not shown), which is most advantageously connected with the drawbar 10.

The drive and pressure rollers 4, 8 are formed in such a way that they automatically centre themselves on the aircraft wheel 6. The diameters of the edges of these rollers 4, 8 are greater than the diameter of their centres when lateral movement caused by some deviance cause the pressure to increase, which returns the roller to the central position.

The invention can be applied in many ways that deviated from what is stated above, for example as a similar variation to that presented in the aforementioned publication WO 85/01265. However, according to this invention the drive wheels are not pressed against the aircraft wheels with the aid of mutual movement, by common movement or twisting and by supporting the lift on the device's own frame and from that onto the ground. The number of wheels, the number of drive and pressure rollers, and the source of power of the motors of the device can be varied in different applications. In a transfer device in accordance with this invention, however, at least two bearing rollers or crawler tracks, which receive the counterforce caused by the pressure, are required. The motor can also be located inside the drive wheels. Battery operated electric motors and correspondingly pressure reservoirs and compressed-air motors can be used for motive power. The length adjustment of the transfer device and the turning of the rear wheels can also be carried out with the aid of suitable operating equipment.

The member that moves the intermediate member 7 could be formed by a system that adjusts the air pressure in the wheels of the transfer device.

## Claims

1. A transfer device equiped with ground wheels (11) to move a wheeled vehicle (1), especially an aircraft or the like, on a base (2), the transfer device including at least two pressure rollers (8, 4) mounted on an intermediate member (7) to be placed around the wheel(s) (6) of the vehicle (1) to be moved, and pressure actuating devices (9) to press the rollers (8, 4) against the wheels (6) of the vehicle to be moved and in which at least one (4) of the pressure rollers (8, 4) is a drive roller, characterized in that the intermediate member (7) is adjustable to keep the pressure and drive rollers (8, 4) at a fixed distance from one another less than the diameter of the wheel(s) (6) of the vehicle (1) to be moved, and that the pressure actuating device (9) is arranged to act between the intermediate member (7) and at least one ground wheel (11) of the transfer device to move the intermediate member (7).

2. A transfer device in accordance with Claim 1, characterized in that the pressure actuating member (9) is a hydraulic or pneumatic cylinder.

3. A transfer device in accordance with Claim 1, characterized in that the member that moves the intermediate member (7) is formed by a system that adjusts the air pressure in the ground wheels (11) of the transfer device.

4. A transfer device in accordance with Claims 1, 2 or 3, characterized in that at least one drive or pressure roller (4, 8) has concave sections, the edge diameter being 5 to 30% greater than the centre diameter.

## Patentansprüche

1. Ein mit Bodenrädern (11) versehenes Transfer- bzw. Verschiebegerät, um ein mit Rädern versehenes Fahrzeug (1), insbesondere ein Flugzeug oder dergleichen, auf einer Fläche (2) zu bewegen, wobei das Verschiebegerät wenigstens zwei Druckrollen (8, 4) umfaßt, die an einem Zwischenglied bzw. -element (7) befestigt sind, die um das/die Rad/Räder (6) des zu bewegenden Fahrzeugs (1) herum angeordnet sind, und mit druckerzeugenden Geräten (9), um die Druckrollen (8, 4) gegen das/die Rad/Räder (6) des zu bewegenden Fahrzeugs zu pressen und in dem wenigstens eine (4) der Druckrollen (8, 4) eine Antriebsrolle ist, dadurch gekennzeichnet, daß das Zwischenglied bzw. -element (7) adjustierbar ist, um den Druck und die Antriebsrollen (8, 4) in einem festen bzw. bestimmten Abstand voneinander zu halten, der kleiner ist als der Durchmesser des/der Rades/Räder (6) des zu bewegenden Fahrzeugs (1), und daß das druckerzeugende Gerät (9) angeordnet ist, um zwischen dem Zwischenglied bzw. -element (7) und wenigstens einen Bodenrad (11) des Transfergeräts zu wirken, um das Zwischenglied bzw. -element (7) zu bewegen.

2. Ein Transfer- bzw. Verschiebegerät nach Anspruch 1, dadurch gekennzeichnet, daß das druckerzeugende Gerät (9) ein Hydraulik- oder Pneumatikzylinder ist.

3. Ein Transfer- bzw. Verschiebegerät nach Anspruch 1, dadurch gekennzeichnet, daß das Glied bzw. Element, das das Zwischenglied bzw. -element (7) bewegt, durch ein System gebildet ist, das den Luftdruck in den Bodenrädern (11) des Transfer- bzw. Verschiebegerät adjustiert.

4. Ein Transfer- bzw. Verschiebegerät nach einem der Ansprüche 1 bis 3, dadurch gekennzeichnet, daß wenigstens eine Antriebs- oder Druckrolle (4, 8) konkave Sektionen bzw. Bereiche aufweist, deren Randdurchmesser 5 bis 30% größer ist als der Mitteldurchmesser.

**Revendications**

1. Dispositif de transfert équipé de roues au sol (11) destiné à déplacer sur une base (2) un véhicule équipé de roues (1), en particulier un avion ou véhicule analogue, le dispositif comprenant au moins deux galets de pression (8, 4) montés sur des membres intermédiaires (7) pour être placés autour de la (des) roue(s) (6) du véhicule (1) destiné à être déplacé, et des vérins (9) pour presser les galets (8, 4) contre la (les) roue(s) (6) du véhicule, et dans lequel au moins un (4) des galets de pression (8, 4) est un galet d'entraînement caractérisé en ce que le membre intermédiaire (7) est ajustable en vue de maintenir les galets de pression et d'entraînement (8, 4) à une distance fixe les uns des autres inférieure au diamètre de la (des) roue(s) (6) du véhicule (1) destiné à être déplacé, et que le vérin de pression (9) est disposé de manière à agir entre le membre intermédiaire (7) et au moins une roue au sol (11) du dispositif de transfert en vue d'actionner le membre intermédiaire (7).

2. Dispositif de transfert selon la revendication 1, caractérisé en ce que le vérin de pression (9) est un cylindre hydraulique ou pneumatique.

3. Dispositif de transfert selon la revendication 1, caractérisé en ce que le membre actionnant le membre intermédiaire (7) est un système ajustant la pression d'air dans les roues au sol (11) du dispositif de transfert.

4. Dispositif de transfert selon la revendication 1, 2 ou 3, caractérisé en ce que au moins un galet de pression et d'entraînement (4, 8) présente des sections concaves, le diamètre des bords étant supérieur de 5 à 30% au diamètre central.

FIG. 1

FIG. 2

FIG. 3

FIG. 4

EP 0 302 873 B1